**Europäisches Patentamt**

**European Patent Office**

**Office européen des brevets**

(19)

(11) Veröffentlichungsnummer: **0 177 752**
**B1**

(12) ## EUROPÄISCHE PATENTSCHRIFT

(45) Veröffentlichungstag der Patentschrift:
**07.12.88**

(21) Anmeldenummer: **85111136.9**

(22) Anmeldetag: **04.09.85**

(51) Int. Cl.⁴: **F 02 M 59/08,** F 02 M 63/02,
F 02 M 45/00

(54) **Kraftstoffeinspritzpumpe für selbstzündende Brennkraftmaschinen.**

(30) Priorität: **02.10.84 DE 3436042**

(43) Veröffentlichungstag der Anmeldung:
**16.04.86 Patentblatt 86/16**

(45) Bekanntmachung des Hinweises auf die Patenterteilung:
**07.12.88 Patentblatt 88/49**

(84) Benannte Vertragsstaaten:
**DE FR GB**

(56) Entgegenhaltungen:
**CH-A- 472 576**
**DE-A- 3 013 088**
**DE-A- 3 117 220**
**DE-A- 3 430 143**
**FR-A- 2 157 577**

(73) Patentinhaber: **ROBERT BOSCH GMBH, Postfach 50,
D-7000 Stuttgart 1 (DE)**

(72) Erfinder: **Höfer, Gerald, Schönblickstrasse 16,
D-7251 Weissach-Flacht (DE)**
Erfinder: **Nothdurft, Heinz, Steinenbronnerstrasse 26,
D-7000 Stuttgart 70 (DE)**

## Beschreibung

### Stand der Technik

Die Erfindung geht von einer Kraftstoffeinspritzpumpe nach der Gattung des Hauptanspruchs aus. Bei einer durch die DE-A- 31 17 220 bekannten Kraftstoffeinspritzpumpe dieser Art ist jeder Pumpenarbeitsraum ständig mit je einer Entlastungsleitung verbunden, die im Pumpenkolben verlaufen und getrennte Austritte am Pumpenkolben haben und dort durch den Schieber gesteuert werden. Weiterhin führt von den Entlastungsleitungen jeweils eine Querverbindung zu je einer Verteileröffnung, die mit entsprechenden am Umfang der Stufenbohrung verteilten Förderleitungen zusammenarbeiten. Bei der bekannten Kraftstoffeinspritzpumpe wird jeder Pumpenarbeitsraum über Füllnuten in Form von Längsnuten während des Saughubs des Pumpenkolbens versorgt. Der erste Pumpenarbeitsraum ist darüber hinaus bei Hubbeginn des Pumpenkolbens bis zu einer bestimmten Hubstellung ständig mit dem Entlastungsraum verbunden. Diese Kraftstoffeinspritzpumpe arbeitet so, dass der aus dem zweiten Pumpenarbeitsraum verdrängte Kraftstoff ständig, d.h. vom Beginn des Pumpenkolbenförderhubs an mit der Kraftstoffeinspritzleitung verbunden ist und dass weiterhin zu der vom zweiten Pumpenkolben verdrängten Kraftstoffeinspritzmenge ab einem bestimmten Pumpenkolbenhub der aus dem ersten Arbeitsraum unter Hochdruck verdrängte Kraftstoff zusätzlich zur Einspritzung kommt. Diese Einrichtung hat den Nachteil, dass sie einmal bezüglich der Kraftstoffverteilung aus dem zweiten Pumpenarbeitsraum und den ersten Pumpenarbeitsraum sehr aufwendig ist und dass die Einrichtung bei Vollastbetrieb sehr lange Spritzzeiten aufweist, die besonders dann, wenn von der Kraftstoffeinspritzpumpe eine mit Direkteinspritzung arbeitende Brennkraftmaschine versorgt werden soll, sehr nachteilig ist. Insbesondere ist bei der bekannten Lösung die Spritzdauer im Leerlaufbereich kürzer als im Vollastbereich, was sich ungünstig auf die Geräuschentwicklung und das Leistungsverhalten der Brennkraftmaschine auswirkt. Ungünstig ist auch, dass die Einspritzrate zum Zeitpunkt des Zuschaltens der Förderung aus dem ersten Pumpenarbeitsraum sprungartig zunimmt. An diesem Unstetigkeitspunkt ist mit Regelungsproblemen zu rechnen.

Durch die DE-A-30 13 088 ist ferner eine Kraftstoffeinspritzpumpe bekannt, die einen Stufenkolben aufweist und ebenfalls einen ersten und zweiten Pumpenarbeitsraum in einem Stufenzylinder einschliesst. Die Pumpenarbeitsräume sind jedoch getrennt über je eine Entlastungsleitung und einen Steuerschieber entlastbar. Diese Pumpe benötigt in aufwendiger Weise zwei Mengenregeleinrichtungen zur Einstellung der einzelnen Steuerschieber.

### Vorteile der Erfindung

Die erfindungsgemässe Kraftstoffeinspritzpumpe mit den kennzeichnenden Merkmalen des Hauptanspruchs hat demgegenüber den Vorteil, dass eine Kraftstoffförderung aus beiden Pumpenarbeitsräumen mit dem Förderhub des Pumpenkolbens beginnt. Vorteilhafterweise wird aus dem zweiten Pumpenarbeitsraum eine konstante Kraftstoffmenge gefördert, die sich über den gesamten maximal möglichen Pumpenkolbenhub verteilen kann. Damit erhält man eine geringe Basismenge von gefördertem Kraftstoff mit einer verhältnismässig geringen Kraftstoffeinspritzrate, die zum Beispiel ausreichend ist, die Brennkraftmaschine für den Leerlaufbetrieb zu versorgen. Durch die Steuerung mit dem Schieber wird zusätzlich zu dieser geförderten Menge eine mehr oder weniger grosse Kraftstoffmenge aus dem ersten Pumpenarbeitsraum der jeweiligen Kraftstoffeinspritzleitung zugeführt, wobei bei Leerlaufbetrieb die aus diesem Pumpenarbeitsraum geförderte Kraftstoffmenge in vorteilhafter Weise zum Vorspannen des Totvolumens im System verwendet wird. Entsprechend der Verstellung des Schiebers nimmt die aus dem ersten Pumpenarbeitsraum geförderte Kraftstoffmenge dann mit steigender Last bis zum Erreichen des Vollastbetriebes zu. Damit erhält man eine insgesamt gleiche Förderdauer unabhängig von der Last und insbesondere Leerlaufbetrieb eine sehr geringe und gleichmässige Kraftstoffeinspritzrate. Zur Vermeidung von Einspritzmengenstreuungen wird regelmässig mit Pumpenförderhubbeginn des Totvolumen vorgespannt.

Mit der Ausgestaltung wird ferner ermöglicht, nur eine Verteileröffnung vorzusehen. Dementsprechend wird auch die Zahl der genauest zu fertigen Versorgungsbohrungen am Umfang der Stufenbohrung verringert. In einer vorteilhaften Weiterbildung gemäss Anspruch 2 ergibt sich eine günstige Versorgung des zweiten Pumpenarbeitsraumes mit Kraftstoff und zugleich eine exakte Begrenzung der wirksamen Förderung aus diesem Pumpenarbeitsraum.

### Zeichnung

Zwei Ausführungsbeispiele der Erfindung sind in der Zeichnung dargestellt und werden in der nachfolgenden Beschreibung näher erläutert. Es zeigen Figur 1 den erfindungswesentlichen Teil einer Verteilerkraftstoffeinspritzpumpe in der Ausführung als Stufenkolbeneinspritzpumpe im Längsschnitt, Figur 2 ein Diagramm über die Verteilung der Kraftstoffeinspritzmengen aus den einzelnen Pumpenarbeitsräumen und Figur 3 eine Ausführungsvariante.

### Beschreibung des Ausführungsbeispiels

In einem Gehäuse 1 einer Kraftstoffeinspritzpumpe ist eine Stufenbohrung vorgesehen mit einem ersten Stufenbohrungsteil 2 von kleinerem Durchmesser und einem sich anschliessenden zweiten Stufenbohrungsteil 3 mit grösserem Durchmesser. Der zweite Stufenbohrungsteil mündet in einen Pumpensaugraum 4, der in bekannter Weise von einer Kraftstofförderpumpe 6 aus einem Kraftstoffvorratsbehälter 7 mit Kraftstoff versorgt wird. Zur Einstellung eines bestimmten Kraftstoffdrucks im Pumpensaugraum 4 ist parallel zur Kraftstofförderpumpe ein Drucksteuerventil 8 vorgesehen.

In die Stufenbohrung 2, 3 ist ein Stufenkolben 9 eingesetzt, mit einem ersten Stufenkolbenteil 11 von geringerem Durchmesser und einem zweiten Stufenkolbenteil 12 von grösserem Durchmesser, der in den Pumpensaugraum 4 ragt und dort durch hier nicht weiter dargestellte, bekannte Mittel in eine hin- und hergehende und entsprechend fördernde und saugende Bewegung und zugleich in eine rotierende Bewegung versetzt wird. Mit dem ersten Stufenkolbenteil 11 schliesst der Stufenkolben im ersten Stufenbohrungsteil 2 einen ersten Pumpenarbeitsraum 14 ein und mit dem zweiten Stufenkolbenteil 12 verbunden mit der Mantelfläche des ersten Stufenkolbenteils 11 schliesst der Stufenkolben in dem zweiten Stufenbohrungsteil 3 einen zweiten Pumpenarbeitsraum 15 ein. Vom ersten Pumpenarbeitsraum 14 führt über ein Rückschlagventil 16, das in Ausströmrichtung aus dem ersten Pumpenarbeitsraum 14 öffnet, eine erste Förderleitung 17 ab, die in eine zweite Förderleitung 18 mündet, welche unverschliessbar vom zweiten Pumpenarbeitsraum 15 abführt. Über eine gemeinsame Förderleitung 19 münden die erste und die zweite Förderleitung in den ersten Stufenbohrungsteil 2 ein und dort in eine sich am Umfang des ersten Stufenkolbenteils 11 befindliche Aussenringnut 20. Von dieser zweigt eine Längsnut 21 ab, die als Verteilernut ausgebildet ist und während der Drehung des Stufenkolbens 9 nacheinander bei den einzelnen Förderhüben mit Einspritzleitungen 23 in Verbindung kommen, die in einer Radialebene am Umfang des ersten Stufenbohrungsteils 2 verteilt abführen. Die einzelnen Kraftstoffeinspritzleitungen leiten den geförderten Kraftstoff über ein Druckventil 24 jeweils zu der symbolisch gezeigten Kraftstoffeinspritzdüse 25.

Zur Kraftstoffversorgung weist der erste Stufenkolbenteil 11 an seiner Mantelfläche Saugnuten 27 auf, die während des Saughubs des Pumpenkolbens durch entsprechende Verdrehung derselben mit Saugöffnungen 28 in Verbindung kommen und den Pumpenarbeitsraum 14 mit einem Saugkanal 29 verbinden, der vom Pumpensaugraum 4 her durch das Pumpengehäuse verläuft. Von diesem Saugkanal zweigt ein zusätzlicher Saugkanal 30 ab, der ebenfalls in den ersten Stufenbohrungsteil 2 mündet, mit einer Saugöffnung 31, die im Bewegungsbereich der Aussenringnut 20 liegt. In der in der Zeichnung gezeigten unteren Totpunktslage des Pumpenkolbens hat die Aussenringnut 20 die Saugöffnung 31 geöffnet, so dass Kraftstoff aus dem Pumpensaugraum über die Ringnut 20, die Förderleitung 19 und die zweite Förderleitung 18 in den zweiten Pumpenarbeitsraum 15 gelangen kann. Nach einem Pumpenkolbenvorschub der Grösse $h_v$ wird die Saugöffnung 31 durch den Stufenbohrungsteil 11 verschlossen.

Im Pumpenkolben 9 ist eine Entlastungsleitung 33 in Form einer von der Stirnfläche des ersten Stufenkolbenteils 11 ausgehenden Längsbohrung vorgesehen, die in dem in den Pumpensaugraum 4 ragenden Teil des Pumpenkolbens 9 in einen Querkanal 34 übergeht und an einem Austritt 36 an der Pumpenkolbenmantelfläche mündet. Auf diesem Pumpenkolbenteil ist ferner in bekannter Weise ein Ringschieber 37 als Kraftstoffmengenverstellorgan vorgesehen, der mit seiner oberen Stirnkante je nach Relativstellung zum Pumpenkolben ab einem früheren oder späteren Pumpenkolbenhub $h_{FE1}$ nach Förderbeginn des Pumpenkolbens den Austritt 36 öffnet, so dass der restliche vom Pumpenkolben aus dem ersten Pumpenarbeitsraum 14 geförderte Kraftstoff zum Saugraum 4 hin abströmen kann. Ab diesem Punkt ist die Hochdruckförderung in die jeweilige Kraftstoffeinspritzleitung 23 unterbrochen. Die Hubstellung des Ringschiebers 37 wird in bekannter Weise durch einen Regler vorgenommen, der über einen Reglerhebel 39 mit dem Ringschieber 37 gekoppelt ist und von einer drehzahlabhängigen Kraft $K_{Fl}$ entgegen einer änderbaren Rückstellkraft einer Regelfeder $K_{Rf}$ beaufschlagt ist. Der Reglerhebel ist um eine vorzugsweise einstellbare Achse 40 schwenkbar und greift mit einer an seinem einen Hebelarm befestigten Kugel 41 in eine entsprechende Ausnehmung 42 des Ringschiebers 37.

Von der Entlastungsleitung 33 zweigt ein Querkanal 43 ab, dessen Austritt 44 an der Mantelfläche des zweiten Stufenkolbenteils 12 liegt und nach einem Pumpenkolbenhub der Grösse $h_{FE2}$ mit dem zweiten Pumpenarbeitsraum in Verbindung kommt. Dies geschieht über eine pumpensaugraumseitige Begrenzungskante 46 einer ständig mit dem zweiten Pumpenarbeitsraum 15 in Verbindung stehenden Ausnehmung 47. Nach diesem Hub $h_{FE2}$ nach Förderhubbeginn des Pumpenkolbens wird somit der zweiten Pumpenarbeitsraum zur Entlastungsleitung 33 und damit zum Pumpensaugraum 4 hin entlastet.

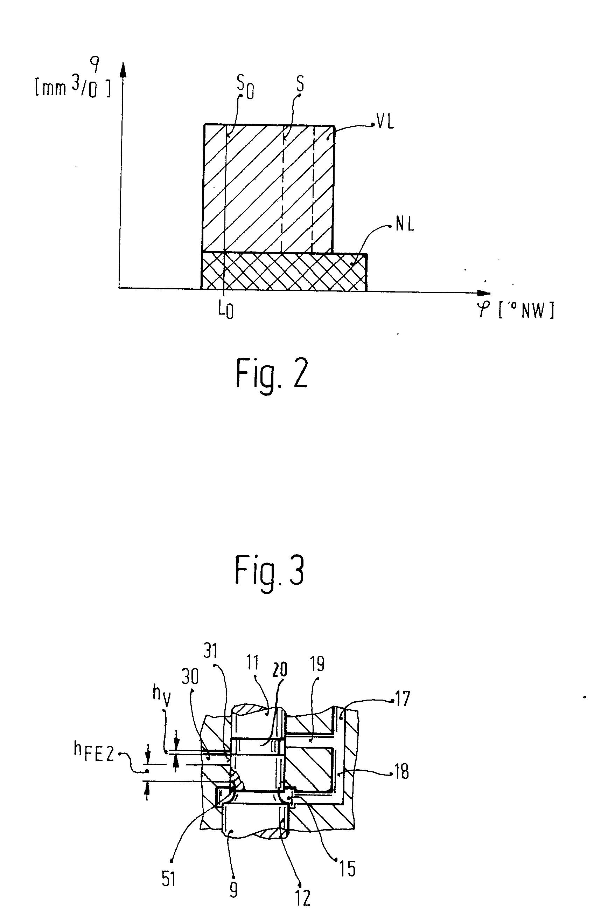

Während des Saughubes in der gezeigten Stellung des Pumpenkolbens 9 werden also die Pumpenarbeitsräume 14 und 15 über den Saugkanal 29 mit Kraftstoff versorgt. Der Austritt 36 ist zu diesem Zeitpunkt verschlossen, so dass bei dem anschliessenden Pumpenkolbenförderhub nunmehr Kraftstoff aus den einzelnen Pumpenarbeitsräumen unter hohem Druck verdrängt wird, nachdem nach einem Vorhub $h_v$ diese Öffnung 31 verschlossen ist. Zu diesem Zeitpunkt ist die Längsnut 21 in Verbindung mit einer der Einspritzleitungen 23 und es wird der aus dem ersten Pumpenarbeitsraum 14 in die erste Förderleitung 17 geförderte Kraftstoff der jeweiligen Einspritzleitung 23 zugeteilt. Zugleich fördert der Pumpenkolben auch aus dem zweiten Pumpenarbeitsraum 15 Kraftstoff über die zweite Förderleitung 18 zur Verteilernut 21. Sobald nach dem Pumpenhub $h_{FE1}$ der Austritt 36 geöffnet wird, wird in die erste Förderleitung 17 kein Kraftstoff mehr gefördert. Der weiterhin fördernde Stufenkolbenteil 12 führt der Verteilernut nunmehr die restliche Kraftstoffeinspritzmenge zu, wobei das Rückschlagventil 16 ein Abströmen zur Entlastungsseite hin verhindert. Mit dem Öffnen des Austritts 44 ist dann auch der restliche Teil der Hochdruckförderung durch den Pumpenkolben beendet. Die Verdrängung des zweiten Stufenkolbenteils 12 und der wirksame Förderhub $h_{FE2}$ sind dabei so abgestimmt, dass die aus den zweiten Pumpenarbeitsraum geförderte Kraftstoffmenge für den Niedriglastbereich ausreichend ist. Aus dem Diagramm in Figur 2 erkennt man, dass hiermit entsprechend der mit NL gekennzeichneten schraffierten Fläche eine niedrige Kraftstoffeinspritzrate über einen maximalen Pumpenkolbenhub erzielt wird. Die aus dem ersten Pumpenarbeitsraum unter Hochdruck geförderte Kraftstoffmenge ist dagegen unter Mitwirkung des Ringschiebers 37 variabel und in der Figur 2 mit der schraffierten Fläche VL bezeichnet. Je nach Stellung des Ringschiebers verändert sich dieser Kraftstoffförderteil zu einer der gestrichelten senkrechten Linien S. Die Auslegung der Einspritzpumpe ist vorteilhaft so, dass bei Niedrigstlast Lo entsprechend der Linie So aus dem ersten Pumpenarbeitsraum 14 die Kraftstoffmenge gefördert wird, die zum Auffüllen und Vorspannen des Totvolumens zwischen Pumpenarbeitsraum und Einspritzstelle benötigt wird. Die tatsächliche Einspritzmenge wird danach durch die Förderung aus dem zweiten Pumpenarbeitsraum erbracht. Dies hat den Vorteil, dass sehr schnell das Totvolumen vorgespannt wird entsprechend der höheren Einspritzrate des ersten Stufenkolbenteils 11 mit anschliessender geringer Kraftstoffeinspritzrate zur Erzeugung eines möglichst geräuscharmen Verbrennungsverlaufes.

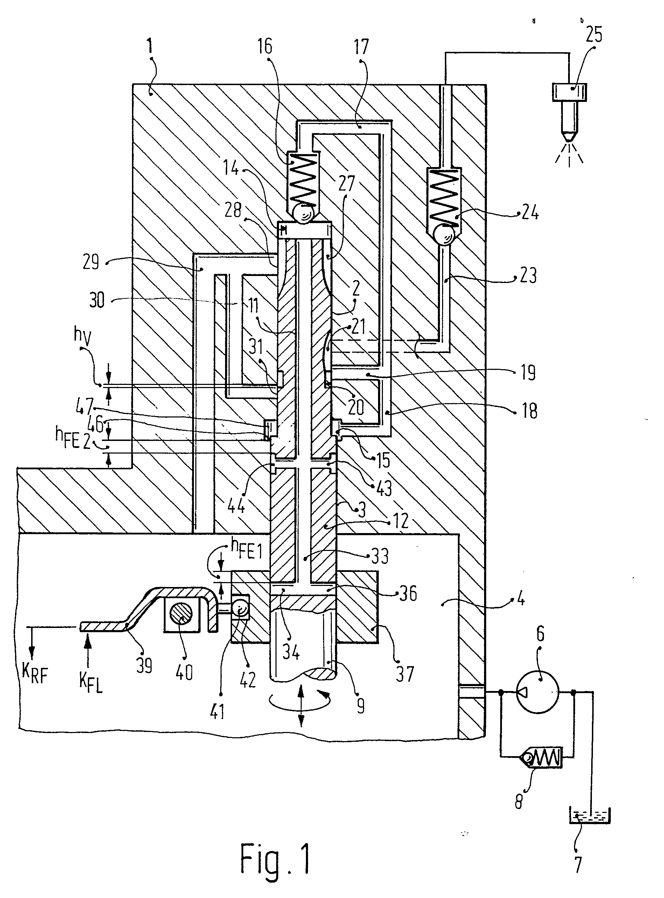

In Figur 3 ist eine Ausführungsvariante zum Ausführungsbeispiel nach Figur 1 dargestellt. Dort ist eine andere Lösung für die Entlastung des zweiten Pumpenarbeitsraumes 15 am Ende des wirksamen Förderhubs des zweiten Stufenkolbenteils 12 dargestellt mit der Ringnut 20 am ersten Stufenkolbenteil, mit der in die erste Stufenbohrung 2 einmündenden Förderleitung 19, die mit der ersten Förderleitung 17 und der zweiten zum zweiten Pumpenarbeitsraum 15 führenden zweiten Förderleitung 18 in Verbindung steht. Weiterhin ist wie beim Ausführungsbeispiel nach Figur 1 die Saugöffnung 31 des in den Stufenbohrungsteil 2 mündenden zusätzlichen Saugkanals 30 dargestellt, die mit der Überdeckung $h_v$ zur Ringnut 20 versehen ist. Abweichend zum Ausführungsbeispiel nach Figur 1 ist nun am Übergang des zweiten Stufenkolbenteils 12 zum ersten Stufenkolbenteil 11 eine Ausnehmung 51 zum Beispiel in Form einer Längsnut vorgesehen, die ständig mit dem zweiten Pumpenarbeitsraum 15 in Verbindung steht und deren obere Begrenzungskante einen Hub $h_{FE2}$ von der Überdeckung mit der Saugöffnung 31 entfernt ist, wenn sich der Pumpenkolben 9, wie in der Zeichnung dargestellt, in der unteren Totpunktlage befindet. Auch auf diese Weise lässt sich sehr einfach der wirksame Förderhub des zweiten Stufenkolbenteils 12 begrenzen ohne dass zusätzliche Bohrungen zu der Stufenbohrung hin notwendig sind. Ist die Einmündung des Saugkanals 30 in den ersten Stufenbohrungsteil 2 nur mit einer einzelnen Eintrittsöffnung 31 versehen wie ausgeführt, so wird vorteilhafterweise die Ausnehmung 51 als Ringnut ausgestaltet, so dass die Absteuerung unabhängig von der Drehstellung des Pumpenkolbens erfolgen kann.

## Patentansprüche

1. Kraftstoffeinspritzpumpe für selbstzündende Brennkraftmaschinen mit einem ersten, im Durchmesser kleineren Pumpenkolben (11), der einen ersten Pumpenarbeitsraum (14) in einer ersten Zylinderbohrung (2) einschliesst, und mit einem zweiten hin- und hergehend und zugleich rotierend angetriebenen, im Durchmesser grösseren Pumpenkolben (12), der durch seine hin- und hergehende Bewegung zugleich eine hin- und hergehende Bewegung des ersten Pumpenkolbens in der ersten Zylinderbohrung erzeugt und der in einer zweiten, im Durchmesser grösseren Zylinderbohrung (3) zusammen mit der Mantelfläche des ersten Pumpenkolbens (11) einen zweiten Pumpenarbeitsraum (15) einschliesst, der wie auch zugleich der erste Pumpenarbeitsraum (14) über eine Förderleitung (17, 18, 19) und eine Verteileröffnung (21) am Pumpenkolben bei jedem von aufeinanderfolgenden Pumpenkolbenförderhüben mit jeweils einer von am Umfang der Zylinderbohrung verteilt von dieser abführenden Einspritzleitungen (23) verbindbar ist, wobei der erste Pumpenarbeitsraum (14) vom zweiten Pumpenarbeitsraum (15) über ein in Förderrichtung von einem der Pumpenarbeitsräume öffnendes und in Förderrichtung von dem anderen der Pumpenarbeitsräume schliessendes Rückschlagventil (16) entkoppelbar ist und der erste Pumpenarbeitsraum (14) entlastbar ist, über eine im Pumpenkolben verlaufende Entlastungsleitung (33) deren Austritt (36) am Pumpenkolben zu einem Entlastungsraum (4) durch einen auf dem Pumpenkolben verstellbaren Schieber (37) ab einem durch dessen Stellung festgelegten Pumpenkolbenhub ($h_{FE1}$) geöffnet oder geschlossen wird und der erste und der zweite Pumpenarbeitsraum durch Steueröffnungen (27, 31, 20) am Pumpenkolben während des Saughubs des Pumpenkolbens mit einer Kraftstoffversorgungsquelle (4) verbindbar sind, dadurch gekennzeichnet, dass der erste Pumpenarbeitsraum (14) während des Förderhubs des Pumpenkolbens ausschliesslich über den Austritt (36) der Entlastungsleitung (33) entlastbar ist, der bei Förderhubbeginn durch den Schieber (37) verschlossen ist, und der zweite Pumpenarbeitsraum (15) ab einem konstanten Pumpenkolbenhub ($h_{FE2}$), von der Stellung des Schiebers (37) unabhängig, mit einer zum Entlastungsraum (4) führenden Entlastungsleitung (30, 33) verbindbar ist, und dass eine gemeinsame Einmündung der vom ersten Pumpenarbeitsraum (14) abgehenden ersten Förderleitung (17) und der vom zweiten Pumpenarbeitsraum (15) abgehenden zweiten Förderleitung (18) in die erste (2) oder zweite (3) Zylinderbohrung vorgesehen ist, welche Einmündung über eine Ringnut (20) mit der Verteileröffnung (21) in ständiger Verbindung steht, über die ein gleichzeitiger Förderbeginn beider Pumpenarbeitsräume (14, 15) in die Einspritzleitung (23) erfolgt.

2. Kraftstoffeinspritzpumpe nach Anspruch 1, dadurch gekennzeichnet, dass in der ersten Förderleitung (17) das Rückschlagventil (16) angeordnet ist und die Ringnut (20) ab einen Pumpenkolbenvorhub ($h_v$) vor Ende des Saughubes des Pumpenkolbens über einen Kraftstoffsaugkanal (30, 29) mit der Kraftstoffquelle (4) verbunden ist, wobei der Pumpenkolbenvorhub ($h_v$) kleiner ist als der bestimmte Pumpenkolbenhub ($h_{FE2}$), bei dem der zweite Pumpenarbeitsraum (15) in Verbindung mit dem Entlastungsraum (4) kommt.

3. Kraftstoffeinspritzpumpe nach Anspruch 2, dadurch gekennzeichnet, dass der zweite Pumpenarbeitsraum über die Begrenzungskante einer Ausnehmung (51) am Pumpenkolben mit dem Kraftstoffversorgungskanal (30) am Ende des bestimmten Pumpenkolbenförderhubs ($h_{FE2}$) verbunden wird.

4. Kraftstoffeinspritzpumpe nach Anspruch 2, dadurch gekennzeichnet, dass der zweite Pumpenarbeitsraum (15) über die Begrenzungskante (46) einer Ausnehmung (47) in der zweiten Zylinderbohrung (3) mit einer Verbindungsöffnung (44) zur im zweiten Pumpenkolben verlaufenden Entlastungsleitung (33) am Ende des bestimmten Pumpenkolbenförderhubs ($h_{FE2}$) verbunden wird.

**Revendications**

1. Pompe d'injection de carburant pour moteurs à combustion interne de type Diesel comportant un premier piston de pompe (11) de petit diamètre qui délimite une première chambre (14) de pompe dans un premier alésage de cylindre (2) et un second de pompe (12) de plus grand diamètre, le second piston effectuant un mouvement alternatif et rotatif combiné qui, du fait de son mouvement alternatif commande en même temps un mouvement alternatif du premier piston dans le premier alésage de cylindre et qui dans le second alésage de cylindre (3) de diamètre plus grand, en combinaison avec la surface périphérique du premier piston de pompe (11) délimite une seconde chambre de piston (15) qui, comme la première chambre de pompe (14) est reliée par une conduite de transfert (17, 18, 19) et un orifice de distribution (21) du piston de pompe au cours de chacune des courses de transfert successives du piston communique avec l'une des conduites d'injection (23) réparties à la périphérie de l'alésage du cylindre, la première chambre (14) de la pompe étant susceptible d'être coupée de la seconde chambre (15) de la pompe par une soupape d'arrêt (16) qui s'ouvre dans le sens de transfert à partir de l'une des chambres de pompe et se ferme dans le sens de transfert partant de l'autre chambre de la pompe, et la première chambre (14) de la pompe peut se décharger par une conduite de décharge (33) passant par le piston de la pompe et dont la sortie (36) est ouverte ou fermée par rapport à la chambre de décharge (4) par un tiroir (37) réglable par rapport au piston à partir d'une position définie par rapport à la course ($h_{FE1}$) du piston, la première et la seconde chambre de pompe pouvant être reliées par des orifices de commande (27, 31, 20) du piston de pompe au cours de la course d'aspiration du piston sur une source d'alimentation en carburant (4), pompe caractérisée en ce que la première chambre (14) au cours de la course de transfert du piston peut se décharger uniquement par la sortie (36) de la conduite de décharge (33), qui est fermée au début de la course de transfert par le tiroir (37) et la seconde chambre (15) de la pompe peut être reliée à partir d'une certaine course constante ($h_{FE2}$) de la pompe indépendamment de la position du tiroir (37) à une conduite de décharge (30, 33) aboutissant à la chambre de décharge (4) et en ce qu'un orifice commun de la conduite de transfert (17) partant de la première chambre (14) de la pompe et d'une seconde conduite de transfert (18) partant de la seconde chambre (15) de la pompe dans le premier ou le second alésage (2, 3) de cylindre, orifice qui communique en permanence avec l'orifice de distribution (21) par une rainure annulaire (20) par laquelle se fait un début de transfert simultané des deux chambres de pompe (14, 15) dans la conduite d'injection (23).

2. Pompe d'injection de carburant selon la revendication 1, caractérisée en ce que la soupape d'arrêt (16) est prévue dans la première conduite de transfert (17) et en ce que la rainure annulaire (20) est reliée à partir d'une certaine course de piston ($h_v$) avant la fin de la course d'aspiration du piston par un canal de carburant (30, 29) à la source de carburant (4), la course préalable ($h_v$) du piston étant inférieure à la course déterminée ($h_{FE2}$) du piston, et la seconde chambre de pompe (15) communique avec la chambre de décharge (4).

3. Pompe d'injection de carburant selon la revendication 2, caractérisée en ce que la seconde chambre de pompe est reliée par l'arête de limitation d'une cavité (51) du piston de pompe au canal d'alimentation de carburant (30) à la fin de la course prédéterminée de transfert de pompe ($h_{FE2}$).

4. Pompe d'injection de carburant selon la revendication 2, caractérisée en ce que la seconde chambre de pompe (15) est reliée par l'arête de limitation (46) d'une première cavité (47) du second alésage de cylindre (3) à une ouverture de liaison (44) pour la conduite de décharge (33) allant vers le second piston de pompe à la fin de la coursê de transfert déterminée ($h_{FE2}$) de la pompe.

**Claims**

1. Fuel injection pump for spontaneous internal combustion engines, comprising a first pump piston (11), smaller in diameter and enclosing a first pump working chamber (14) in a first cylinder bore (2), and a second pump piston (12) which is driven reciprocatingly and at the same time rotationally, is larger in diameter, at the same time, as a result of its reciprocating motion, produces a reciprocating motion of the first pump piston in the first cylinder bore and, in a second cylinder bore (3), larger in diameter, encloses together with the circumferential surface of the first pump piston (11) a second pump working chamber (15) which, as well as at the same time the first pump working chamber (14), via a delivery line (17, 18, 19) and a distributor opening (21) on the pump piston, can be connected during each of the successive pump-piston delivery strokes to in each case one of the injection lines (23) distributed on the periphery of the cylinder bore and leading off from the latter, wherein the first pump working chamber (14) can be uncoupled from the second pump working chamber (15) via a non-return valve (16) which is opened in the delivery direction by one of the pump working chambers and is closed in the delivery direction by the other pump working chamber, and the first pump working chamber (14) can be relieved via a relief line (33) which runs in the pump piston and whose outlet (36) on the pump piston is opened or closed relative to a relief chamber (4) by a slide valve (37), adjustable on the pump piston, starting from a pump piston stroke ($h_{FE1}$) established by the position of the slide valve (37), and the first and the second pump working chamber can be connected to a fuel supply source (4) by control openings (27, 31, 20) on the pump piston during the suction stroke of the pump piston, characterized in that the first pump working chamber (14), during the delivery stroke of the pump piston, can be relieved solely via the outlet (36) of the relief line (33), which outlet (36) is closed by the slide valve (37) at the start of the delivery stroke, and the second pump working chamber (15), starting from a constant pump piston stroke ($h_{FE2}$), independent of the position of the slide valve (37), can be connected to a relief line (30, 33) leading to the relief chamber (4), and that a common confluence, leading into the first (2) or second (3) cylinder bore, is provided for the first delivery line (17), branching off from the first pump working chamber (14), and the second delivery line (18), branching off from the second pump working chamber (15), which confluence is constantly connected via an annular groove (20) to the distributor opening (21) via which both pump working chambers (14, 15) simultaneously start delivering into the injection line (23).

2. Fuel injection pump according to Claim 1, characterized in that the non-return valve (16) is arranged in the first delivery line (17), and the annular groove (20), starting from an initial pump piston stroke ($h_v$), before the end of the suction stroke of the pump piston, is connected to the fuel source (4) via a fuel suction channel (30, 29), the initial pump piston stroke ($h_v$) being smaller than the fixed pump piston stroke ($h_{FE2}$) at which the second pump working chamber (15) comes into connection with the relief chamber (4).

3. Fuel injection pump according to Claim 2, characterized in that the second pump working chamber, via the boundary edge of a recess (51) on the pump piston, is connected to the fuel supply channel (30) at the end of the fixed pump-piston delivery stroke ($h_{FE2}$).

4. Fuel injection pump according to Claim 2, characterized in that the second pump working chamber (15), via the boundary edge (46) of a recess (47) in the second cylinder bore (3), is connected at the end of the fixed pump-piston delivery stroke ($h_{FE2}$) to a connecting opening (44) to the relief line (33) running in the second pump piston.

Fig. 1

Fig. 2

Fig. 3